# EUROPEAN PATENT SPECIFICATION

(11) **EP 0 413 701 B1**
(45) Date of publication and mention of the grant of the patent: **17.05.1995**
(21) Application number: 89904459.8
(22) Date of filing: 31.03.1989
(51) Int. Cl.: H01M 2/00, H01M 2/12, H01M 2/04

(54) **INJECTION MOLDED TOP**
DURCH EINSPRITZEN GEFORMTER DECKEL
COUVERCLE MOULE PAR INJECTION

(30) Priority: 05.05.1988 GB 8810651
(43) Date of publication of application: 27.02.1991
(73) Proprietor: DURACELL INTERNATIONAL INC., Needham, MA 02194 (US)
(72) Inventor: POPE, Peter, James, Balcombe Sussex RH17 6LN (GB); WILLIS-OWEN, Richard, Bryn, Nr. Pulborough West Sussex RH20 3BX (GB)
(74) Representative: Mounteney, Simon James
(86) International application number: US8901365
(87) International publication number: WO8911164

(56) References cited:
- EP-A- 0 107 267
- FR-A- 2 518 821
- FR-A- 2 554 640
- GB-A- 2 149 198
- US-A- 3 218 197
- US-A- 3 741 812
- US-A- 4 075 398
- US-A- 4 484 691
- US-A- 4 774 155
- PATENT ABSTRACTS OF JAPAN vol. 9, no. 75 (E-306)(1798) 4 April 1985

## Description

This invention relates to sealed electrochemical cells, such as primary alkaline cells, and more particularly to an improved sealing and insulating member for such cells. In accordance with the invention, multiple vent sections are provided, each having a thickness which is easier to form by injection molding than the thicknesses necessitated when a single vent section is used.

The general construction of sealed, cylindrical galvanic cells is such that the principal components, an anode and a cathode, are assembled into a can, together with the appropriate separators, electrolyte, etc. Generally, the can into which the principal cell components are assembled is a positive cathode contact, i.e. the can, and usually the bottom end thereof, forms a cathode contact for the cell and the cell is closed by a member placed in the top end of the can. Such member is generally a sealing and insulating member, by which the cell is sealed so as to preclude electrolyte leakage therefrom, and so that the anode contact of the cell is insulated from the can at the opposite end thereof from its closed bottom end. Said sealing and insulating member, hereinafter referred to as the top member is typically formed from a polymeric material which can be injection molded.

It is common to include a vent membrane that is integrally formed in the top member. The vent membrane is generally of a thickness less than the surrounding thickness of the top member so that the membrane can rupture at a predetermined internal pressure. Top members having a variety of vent designs are disclosed in US patent Nos. 4,191,806; 4,237,203; and 4,476,200. The top member disclosed in US patent 4,476,200 is injection molded using a polypropylene material having a melt index between 4 and 30. A melt index in this range permits the injection molding of very thin vent membranes. US patent 4,191,806 teaches that it is difficult to form thin vent membranes when harder plastics are used to make top members by injection molding. In order to get proper venting, this patent discloses forming grooves in the vent membrane.

Mineral filled polyolefins comprise a class of materials which poses particular problems for making top members by the injection molding process. Mineral filled sealing members are disclosed in Great Britain Patent No. 2,149,198. These materials have a high viscosity when melted, making it difficult to form thin vent membranes in the top member by injection molding. One problem is that vent membranes cannot be made thin enough because the mineral filled polyolefins do not easily flow through the thin section of the injection mold. To overcome this problem the membrane can initially be formed thicker than desired and a moving pin member of the mold used to further compress the vent membrane section down to the desired thickness. In this manner it is possible to form vent membranes having a thickness ranging from 0.0025˝ to 0.005˝ (0.0064 to 0.0127 cm) depending on the particular cell size. However, this method does not produce consistently uniform top members and there is variability in the pressure required to rupture the membrane. Another problem encountered when using mineral filled polyoleflns is that a seam often forms during injection molding where the material flowing from different directions through the mold meet. This seam imparts a fracture zone in the top member.

Thus, it is seen that there is a need for a top member design which can be easily injection molded using filled polyolefins and which incorporates a reliable vent membrane that is easily molded.

The present invention resides in a top for sealing and insulating the open end of a cylindrical container subject to internal pressure variations, said top comprising a sealing and insulating member which comprises a central platform having an axially extending boss, with said platform having at least three discrete thin regions forming inherently rupturable vent membranes each not more than 0.02cm (0.008 inch) thick and each designed to vent at approximately the same pressure, said membranes in combination comprising at least about 30% of the surface area of said platform exclusive of said boss portion, and means to strengthen the top.

Preferably the vent membrane thickness is not less than 0.006cm(0.0025 inch).

The features and advantages of the present invention will be more fully discussed below with reference to the accompanying figures in which:
Figure 1 shows a top view of a sealing and insulating member made in accordance with the present invention;
Figure 2 shows a bottom view of the sealing and insulating member of Figure 1;
Figure 3 shows a side view of the sealing and insulating member of Figure 1;
Figure 4 shows a vertical cross section through the top member of Figure, taken along the line A-A;
Figure 5 shows a vertical cross section through the upper portion of an uncrimped galvanic cell with a stepped can and a top member made in accordance with the present invention; and
Figure 6 shows a vertical cross section through the upper portion of an uncrimped galvanic cell with a beaded can and a top member made in accordance with the present invention.

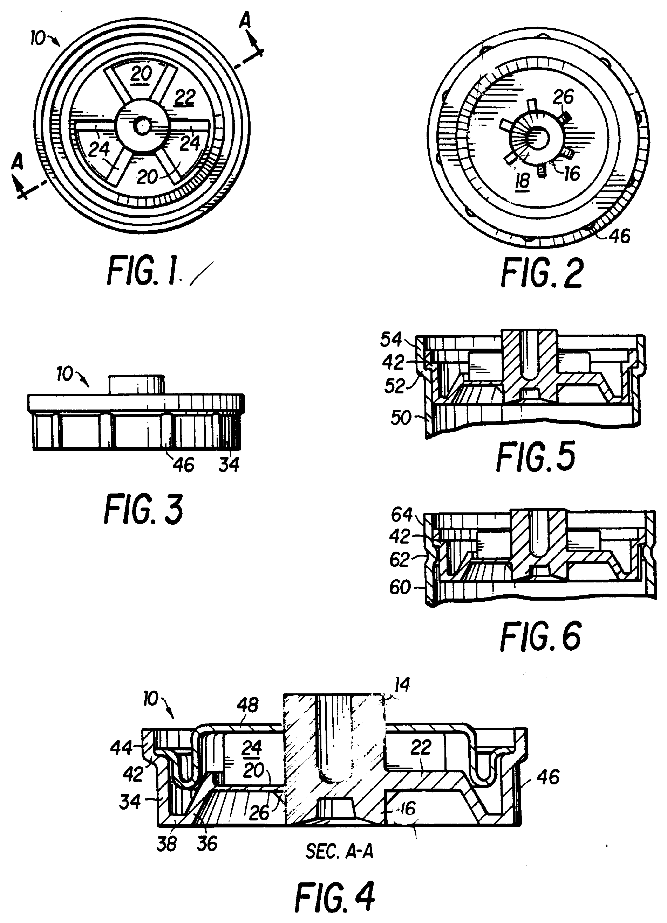

Referring now to Figures 1-5, there is shown a typical sealing and insulating member made according to the present invention and of a type which could be used for sealed alkaline cells. The top member shown in the Figures is designed for use in a AA size alkaline cell. However, it would be readily apparent to one skilled in the art, based on the considerations set forth below, how to modify the multiple vent design for use in other cells.

The top sealing and insulating member 10 has a disc shaped platform 18 which is comprised of alternating thin sections 20 and thick sections 22 and a central cylindrical boss portion comprised of an upper portion 14 and a lower portion 16. The thin sections 20 of platform 18, discussed more fully below, function as vent membranes for top member 10. In the presently preferred form of the invention a frustoconical member 36 depends downwardly from the circumference of the central platform 18. An annular bottom member 38 extends outwardly from the lower end of frustoconical member 36 and then extends upwardly forming outer wall 34 which includes an outwardly directed shoulder 42, and an upper skirt 44. The frustoconical member 36, the annular bottom member 38, and the lower portion of outer wall 34 form a circumferential well which is capable of containing any cell contents which might escape during venting.

As stated above, platform 18 includes thin and thick sections 20,22. The number of alternating thin and thick sections may vary. For a AA size alkaline cell it is preferred that the top member 10 comprises three thin sections 20 and three thick sections 22. The surface area and thickness of each vent membrane 20 are determinative of the pressure necessary to rupture the vent. If the surface area of an individual membrane is too large the membrane can balloon outwardly as the internal cell pressure rises. Such effect can render the vent unreliable because the point where the balloon breaks is unpredictable. Therefore, to keep the ballooning effect to a minimum, the surface area of each vent should not exceed a particular value. For the AA top member described herein, this value is approximately one sixth of the surface area of the annular member 18. Vent membranes 20 should all be of substantially equal size and thickness so that they are all designed to vent at approximately the same pressure.

The top member 10 is frequently used in conjunction with a metal reinforcement ring 48 as shown in Figure 4. The reinforcement ring provides support to the top member 10 during crimping. Thus, it can be seen from Figure 4 why ballooning of the vent membranes 20 should be kept to a minimum. If vent membranes 20 ballooned outwardly so as to contact reinforcement ring 48 the membrane would not break and internal cell pressure would continue to rise.

The high vent membrane surface area permits the use of a thicker vent membrane without increasing the pressure necessary to achieve venting. For example, a AA size cell having a top member as shown in Figure 1 has an overall diameter of about 1.3 cm (0.5 in.). Each vent membrane has a thickness of 0.018-0.02 cm (0.007 to 0.008 in.) and an area of about 0.06 cm² (0.009 in²) which is about 17% of the area of the platform area excluding the boss. For example, a AA cell having such a top may desirably be designed to vent at a pressure on the order of 1100 psi (7585000 Pa). For comparison, a single circular vent membrane fitting within a 60° section of the annular member has an area of about .04 cm² (0.006 in²) and requires the use of a thinner membrane, e.g. one having a thickness between 0.006-0.012 cm (0.0025 to 0.005 in.) to vent at about 1100 psi (7585000 Pa). The thicker vent membranes which can be used in the top member of the present invention can more easily be molded by injection molding without the need for moving pins. Depending on the cell size the vent membrane thickness can be as little as 0.006 cm (0.0025 in) for cells smaller than AA. Further, if the gate for injecting the molten polymer into the mold is located at the center, i.e. where the central boss portion is located, the vent membranes are formed evenly as the molten material flows outwardly towards the circumference of the top member. In this manner no seams or fracture zones are formed. This results in much more reliable vent characteristics of the top member 10.

Two additional benefits to using the top design of the present invention are improved reliability of the multiple vent structure and enhanced diffusion of hydrogen gas. With respect to reliability, the multiple vent top operates as follows. While each vent membrane is roughly of equal size, configuration, and thickness and will theoretically vent at the same pressure, it is probable that only one vent will initially open to relieve internal pressure. In some instances when a cell vents the cell contents can be partially expelled. This can plug the vent opening causing internal pressure to further increase. The present invention provides for a second venting to occur with one of the remaining vent membranes. In contradistinction, for a cell top with one membrane a second venting could not occur and internal pressures could rise to undesirably high levels. As the number of vent membranes increases, e.g. with a cell top with three vents as shown in Figure 1, the reliability of the mechanism is increased and release of internal pressure is assured.

The top design of the present invention provides for enhanced hydrogen diffusion because of the high surface area of the combined vent membranes. This is of particular benefit in alkaline cells where small amounts of hydrogen gas are generated during the life of a cell. The total vent area discussed above with reference to the figures is approximately 45-50% of the total area of the central platform (not includung the area occupied by the boss discussed above). While a total vent area of at least 30% (i.e. each vent is 10%) of the platform would vent properly, it is desirable to use a higher vent surface area in order to enhance hydrogen diffusion. Therefore, it would be desirable to maximize the vent area to maximize hydrogen diffusion, while at the same time not comprimising the structural integrity of the top. If the trickle venting of hydrogen gas was the most important criteria in designing a top then the optimum design would be a platform comprised entirely of thin vent sections, separated by the vertical support ribs discussed below. Thus, depending on the desired result, the present invention encompasses a top having multiple vent sections wherein the total vent area ranges from 30 % to 100% of the platform surface area.

It is preferred that top member 10 further comprises vertical stiffening ribs 24 which extend upward and radially outwardly from the central boss member. Ribs 24 are formed at the junction of the thin sections 20 and thick sections 22 . It is preferred that the ribs extend outwardly to slightly less than the outer circumference of the platform disc and extend upwardly to slightly less than the height of outer wall 34. These ribs provide additional structural support to help minimize the ballooning of the membranes 20. Buttress support members 26 are provided on the underside of top member 10 to provide further strength. The buttress supports 26 are preferably located in a position opposite corresponding ribs 24 on the upperside thereof.

Vertical ribs 46 extend in an axial direction along the outer surface of wall 34. The ribs 46 are preferably spaced equidistantly around the outer surface of wall 34. The number and size of vertical ribs 46 will depend on the cell size. For a AA size cell, as shown in Figures 1-5, the top may have 10 such vertical ribs. Ribs 46 are designed to create a force fit with a portion of the inner wall of a cell casing. Thus, after an anode, cathode, and separator are placed inside a cell casing, top member 10 is pressed into place and there held in place by ribs 46. The cells can then be handled without fear of losing the cell contents before the cell is finally crimped.

There are two common types of crimped seals in general use in electrochemical cells. One type employs a stepped casing and the other type employs a beaded casing. Figure 5 shows how shoulder 42 of top 10 engages with the step 52 of a stepped cell type of casing 50. During crimping a portion 54 of cell casing 50 will be crimped radlally inward against skirt 44 of top 10 creating a seal therebetween. Similarly, Figure 6 shows how shoulder 42 of top 10 will engage the inwardly directed bead 62 of a beaded cell type casing 60 whereupon a portion 64 of cell casing 60 can similarly be crimped radially inward against top 10.

As stated previously, the top 10 is preferably formed from a filled polyolefin material. Preferably, the material is a mineral filled polypropylene wherein the mineral is selected from the group consisting of talc, calcium carbonate, mica, and mixtures thereof. The mineral filler is present in quantities up to 45% and preferably 15% to 40%. The filler material is very finely ground or is a fine particulate material. Substantially no exposure of the filler material appears on the surface of the molded part. In this regard, it is most preferred that approximately 20% filler be used in the top member. An example of a presently preferred material is 20% talc filled polypropylene.

In cylindrical cells, the central electrode is commonly in the form of a nail, inserted through the top or closure member of the cell. The stiffening ribs 24 serve also to provide strength between the central boss and the platform during insertion of the nail electrode through a membrane provided in an axial bore of the boss, in order to resist fracture of the top during insertion of the nail electrode.

## Claims

1. A top for sealing and insulating the open end of a cylindrical container subject to internal pressure variations, said top comprising a sealing and insulating member which comprises a central platform (18) having an axially extending boss (14, 16), with said platform having at least three discrete thin regions forming inherently rupturable vent membranes (20) each not more than 0.02cm (0.008 inch) thick and each designed to vent at approximately the same pressure, said membranes in combination comprising at least about 30% of the surface area of said platform exclusive of said boss portion, and means (24) to strengthen the top.

2. The top of claim 1 wherein said vent membranes comprise 100% of the platform surface area and the means to strengthen the top comprise vertically extending stiffening ribs (24) which extend radially from the central boss member, each rib being integral with the upper surface of the platform (18) at the junction of two adjacent vent membranes (20) such that the ribs divide the platform into equally sized vent membranes.

3. The top of claim 1 wherein said platform is disc shaped, said vent membranes comprise up to about 50% of the platform surface area and are equidistantly spaced around the surface of said disc and are separated from each other by thicker, non-venting portions of said platform.

4. The top of claim 3 wherein said means to support the top comprises vertically extending stiffening ribs which extend radially from the central boss member, and each rib being integral with the upper surface of the platform at the junction of a vent membrane and an adjacent non-venting portion thereof.

5. The top of claim 4 wherein said sealing and insulating member comprises three equally sized vent membranes having a total surface area of approximately 50% of the surface area of said platform exclusive of said boss portion, and said membranes each has a thickness between about 0.018 and 0.02cm (0.007 inch and 0.008 inch).

6. The top of any of claims 1 to 5 where said sealing and insulating member is made from a mineral filled polyolefin.

7. The top of claim 6 wherein said sealing and insulating member is formed from mineral filled polypropylene wherein the mineral is selected from talc, calcium carbonate, mica, and mixtures thereof; and said filler is present in an amount of from 5% to 45% by weight.

8. The top of claim 6 wherein said sealing and insulating member is formed from 20% by weight talc filled polypropylene.

9. The top of any preceding claim wherein said sealing and insulating member further comprises a downwardly depending frustoconical member attached to the outer circumference of the platform; an annular bottom member attached at its inner circumference to the lower end of the frustoconical member; and an upwardly extending outer wall attached to the outer circumference of the annular bottom member.

10. The top of claim 9 wherein said outer wall includes an outwardly extending shoulder.

11. The top of claim 9 or 10 wherein said sealing and insulating member further comprises buttress support members extending outwardly from said boss member and attached to the lower surface of the platform opposite the vertical support ribs on the upper surface thereof.

12. The top of claim 9, 10 or 11 wherein said outer wall of the sealing and insulating member includes vertical ribs on the outer surface of said wall.

13. A sealed electrochemical cell having an anode, a cathode, a cylindrical can having an open end, and a sealing and insulating member located in the open end of the cell can, wherein said sealing and insulating member comprises a central platform having an axially extending central boss, with said platform having at least three vent membranes not more than 0.02cm (0.008 inch) thick which membranes comprise at least about 30% of the surface area of the platform exclusive of the boss portion, and means (24) to streng then the sealing and insulating member.

14. The cell of claim 13 wherein the vent membranes comprise up to about 50% of the platform surface area and said sealing and insulating member is made from a mineral filled polyolefin.

15. The cell of claim 13 or 14 wherein said sealing and insulating member further comprises a downwardly depending frustoconical member attached to the outer circumference of the platform; an annular bottom member attached at its inner circumference to the lower end of the frustoconical member; an upwardly extending outer wall attached to the outer circumference of the annular bottom member; and wherein said outer wall includes an outwardly extending shoulder.

16. The cell of claim 15 wherein said cylindrical can has an outwardly directed step located near its open end such that the shoulder of the sealing and insulating member engages with the step.

17. The cell of claim 15 wherein said cylindrical can has an inwardly directed bead located near the open end of the can such that the shoulder of the sealing and insulating member engages with the bead.

18. An electrochemical cell having a cylindrical can with an open end closed by a top as claimed in any of claims 1 to 12.

## Patentansprüche

1. Deckel zum Abdichten und Isolieren des offenen Endes eines zylindrischen Behälters, der Schwankungen des Innendrucks ausgesetzt ist, wobei dieser Deckel ein Dichtungs- und Isolierelement umfaßt, das eine in der Mitte befindliche Plattform (18) mit einem in der Achsenrichtung vorstehenden Vorsprung (14, 16) aufweist, wobei die Plattform wenigstens drei diskrete dünne Bereiche hat, die inhärent reißfähige Entlüftungsmembranen (20) bilden, die jeweils nicht mehr als 0.02 cm (0.008 Zoll) stark und jeweils so konstruiert sind, daß sie bei annähernd demselben Druck entlüftet werden, wobei diese Membranen kombiniert wenigstens etwa 30% der wirksamen Oberfläche der Plattform ohne den Vorsprungsabschnitt umfassen, sowie Mittel (24) zur Festigung des Deckels.

2. Deckel nach Anspruch 1, bei dem die Entlüftungsmembranen 100% der wirksamen Oberfläche der Plattform umfassen und die Mittel zur Festigung senkrecht verlaufende Versteifungsrippen (24) aufweisen, die radial von dem in der Mitte befindlichen Vorsprungselement vorstehen, wobei jede der Rippen integral mit der oberen Fläche der Plattform (18) an der Verbindung von zwei angrenzenden Entlüftungsmenbranen (20) gebildet wird, so daß die Rippen die Plattform in Entlüftungsmembranen von gleicher Größe unterteilen.

3. Deckel nach Anspruch 1, bei dem die Plattform scheibenförmig ist, die Entlüftungsmembranen bis zu etwa 50% der wirksamen Oberfläche der Plattform umfassen und in gleichen Abständen um die Oberfläche der Scheibe verteilt und voneinander durch stärkere, nicht-entlüftende Abschnitte der Plattform getrennt sind.

4. Deckel nach Anspruch 3, bei dem das Mittel zum Tragen des Deckels senkrecht verlaufende Versteifungsrippen umfaßt, die radial von dem in der Mitte befindlichen Vorsprungselement ausgehen und wobei jede Rippe integral mit der oberen Fläche der Plattform an der Verbindung einer ihrer Entlüftungsmembranen und eines angrenzenden nicht-entlüftenden Abschnitts gebildet wird.

5. Deckel nach Anspruch 4, bei dem das Dichtungs- und Isolierelement drei Entlüftungsmembranen von gleicher Größe umfaßt, die eine wirksame Gesamtfläche von etwa 50% der wirksamen Fläche der Plattform ohne den Vorsprungsabschnitt haben und wobei jede der Membranen eine Stärke zwischen etwa 0.018 und 0.02 cm (0.007 Zoll bis 0,008 Zoll) hat.

6. Deckel nach einem der Ansprüche 1 bis 5, bei dem das Dichtungs- und Isolierelement aus einem mit mineralischem Füllstoff versetzten Polyolefin hergestellt wird.

7. Deckel nach Anspruch 6, bei dem das Dichtungs- und Isolierelement aus einem mit mineralischem Füllstoff versetzten Polypropylen hergestellt wird, wobei das Mineral aus Talk, Calciumcarbonat, Glimmer und deren Gemischen ausgewählt wird und der Füllstoff in einer Menge von etwa 5 bis 45 Gew.-% vorhanden ist.

8. Deckel nach Anspruch 6, bei dem das Dichtungs- und Isolierelement aus einem mit 20 Gew.-% Talk als Füllstoff versetzten Polypropylen hergestellt wird.

9. Deckel nach einem der vorhergehenden Ansprüche, bei dem das Dichtungs- und Isolierelement außerdem ein nach unten hängendes kegelstumpfförmiges Element, das am äußeren Umfang der Plattform angebracht ist; ein ringförmiges Bodenelement, das an seinem inneren Umfang am unteren Ende des kegelstumpfförmigen Elements angebracht ist, und eine nach oben führende Außenwand, die am äußeren Umfang des ringförmigen Bodenelements angebracht ist, aufweist.

10. Deckel nach Anspruch 9, bei dem die Außenwand einen nach außen verlaufenden Ansatz aufweist.

11. Deckel nach Anspruch 9 oder 10, bei dem das Dichtungs- und Isolierelement außerdem Verstärkungsstützglieder aufweist, die von dem Vorsprungselement nach außen führen und an der unteren Fläche der Plattform gegenüber den senkrechten Stützrippen auf deren oberen Fläche angebracht sind.

12. Deckel nach Anspruch 9, 10 oder 11, bei dem die Außenwand des Dichtungs- und Isolierelementes senkrechte Rippen auf der Außenfläche der Wand einschließt.

13. Abgedichtete elektrochemische Zelle, die eine Anode, eine Kathode, einen zylindrischen Behälter mit einem offenen Ende und ein Dichtungs- und Isolierelement, das sich im offenen Ende des Zellenbehälters befindet, hat, wobei dieses Dichtungs- und Isolierelement eine in der Mitte befindliche Plattform umfaßt, die einen sich in der Achsenrichtung erstreckenden, in der Mitte befindlichen Vorsprung hat, wobei die Plattform wenigstens drei Entlüftungsmenbranen von nicht mehr als 0,02 cm (0,008 Zoll) Stärke hat und wobei die Membranen wenigstens etwa 30% der wirksamen Oberfläche der Plattform ohne den Vorsprungsabschnitt umfassen, sowie Mittel (24) zur Festigung des Dichtungs- und Isolierelementes.

14. Zelle nach Anspruch 13, bei der die Entlüftungsmembranen bis zu etwa 50% der wirksamen Oberfläche der Plattform umfassen und das Dichtungs- und Isolierelement aus einem mit mineralischem Füllstoff versetzten Polyolefin hergestellt ist.

15. Zelle nach Anspruch 13 oder 14, bei der das Dichtungs- und Isolierelement außerdem ein nach unten hängendes kegelstumpfförmiges Element, das am äußeren Umfang der Plattform befestigt ist; ein ringförmiges Bodenelement, das an seinem inneren Umfang am unteren Ende des kegelstumpfförmigen Elementes befestigt ist; eine sich nach oben erstreckende Außenwand, die am äußeren Umfang des ringförmigen Bodenelements befestigt ist, aufweist und bei der die Außenwand einen nach außen gerichteten Ansatz einschließt.

16. Zelle nach Anspruch 15, bei der der zylindrische Behälter einen nach außen gerichteten Absatz hat, der sich nahe des offenen Endes befindet, so daß der Ansatz des Dichtungs- und Isolierelementes in den Absatz eingreift.

17. Zelle nach Anspruch 15, bei der der zylindrische Behälter eine nach innen gerichtete Wulst hat, die sich nahe des offenen Endes des Behälters befindet, so daß der Ansatz des Dichtungs- und Isolierelementes in die Wulst eingreift.

18. Elektrochemische Zelle, die einen zylindrischen Behälter mit einem offenen Ende hat, das durch einen Deckel nach einem der Ansprüche 1 bis 12 geschlossen wird.

## Revendications

1. Couvercle pour sceller et isoler l'extrémité ouverte d'un récipient cylindrique soumis à des variations de pression interne, ledit couvercle comprenant un membre de scellement et d'isolation qui comporte une plate-forme centrale (18) pourvue d'une bosse s'étendant axialement (14, 16), ladite plate-forme comportant au moins trois régions minces distinctes formant des membranes d'aération cassables de façon inhérente (20) dont chacune n'est pas plus épaisse que 0,02 cm (0,008 pouces) et dont chacune est conçue pour purger à approximativement la même pression, ces membranes couvrant ensemble au moins à peu près 30% de l'aire de la surface de ladite plate-forme, à l'exclusion de la partie de la bosse, ainsi que des moyens (24) pour renforcer le couvercle.

2. Couvercle suivant la revendication 1 dans lequel lesdites membranes d'aération couvrent 100% de l'aire de la surface de la plate-forme, alors que les moyens pour renforcer le couvercle comportent des nervures de renforcement s'étendant verticalement (24) qui s'étendent radialement depuis l'élément central formant bosse, chaque nervure formant une partie intégrante de la surface supérieure de la plate-forme (18) à la jonction de deux membranes d'aération adjacentes (20), de sorte que les nervures divisent la plate-forme en des membranes d'aération d'égale extension.

3. Couvercle suivant la revendication 1 dans lequel ladite plate-forme possède la forme d'un disque, alors que lesdites membranes d'aération couvrent jusqu'à 50% de l'aire de la surface de la plate-forme et sont espacées à distances égales autour de la surface dudit disque et sont séparées l'une de l'autre par des portions plus épaisses et non purgeantes de ladite plate-forme.

4. Couvercle suivant la revendication 3 dans lequel lesdits moyens pour supporter le couvercle comportent des nervures de renforcement s'étendant verticalement qui s'étendent radialement depuis l'élément central formant bosse, et chaque nervure forme une partie intégrante avec la surface supérieure de la plate-forme à la jonction d'une membrane d'aération et d'une portion adjacente non purgeante de ladite membrane d'aération.

5. Couvercle suivant la revendication 4 dans lequel ledit membre de scellement et d'isolation comprend trois membranes d'aération dimensionnées de manière égale et couvrant une aire de surface totale d'approximativement 50% de l'aire de la surface de ladite plate-forme, à l'exclusion de ladite portion formant bosse, et lesdites membranes possèdent chacune une épaisseur comprise entre environ 0.018 et 0.02 cm (0.007 et 0.008 pouces).

6. Couvercle suivant l'une quelconque des revendications 1 à 5 dans lequel ledit membre de scellement et d'isolation est fabriqué à partir d'une polyoléfine chargée de produits minéraux.

7. Couvercle suivant la revendication 6 dans lequel ledit membre de scellement et d'isolation est formé à partir d'un polypropylène chargé de produits minéraux, dans lequel le produit minéral est choisi parmi le talc, le carbonate de calcium, le mica et des mélanges de ces constituants; et ladite matière de charge est présente en une quantité comprise entre 5% et 45% en poids.

8. Couvercle suivant la revendication 6 dans lequel ledit membre de scellement et d'isolation est formé à partir de polypropylène chargé de 20% en poids de talc.

9. Couvercle suivant l'une quelconque des revendications précédentes dans lequel ledit membre de scellement et d'isolation comprend en outre un membre tronconique pendant vers le bas et fixé à la circonférence externe de la plate-forme; un membre de fond annulaire fixé par sa circonférence interne à la partie inférieure du membre tronconique; ainsi qu'une paroi externe s'étendant vers le haut et fixé à la circonférence externe du membre de fond annulaire.

10. Couvercle suivant la revendication 9 dans lequel ladite paroi externe inclut un épaulement s'étendant vers l'extérieur.

11. Couvercle suivant la revendication 9 ou 10 dans lequel ledit membre de scellement et d'isolation comprend en outre des membres de support de butée s'étendant à partir dudit élément en bosse vers l'extérieur et étant fixés à la surface inférieure de la plate-forme en face des nervures de support verticales sur la surface supérieure de celles-ci.

12. Couvercle suivant la revendication 9, 10 ou 12 dans lequel ladite paroi externe du membre de scellement et d'isolation inclut des nervures verticales sur la surface externe de ladite paroi.

13. Cellule électrochimique scellée ayant une anode, une cathode, un boîtier cylindrique pourvu d'une extrémité ouverte, ainsi qu'un membre de scellement et d'isolation situé dans l'extrémité ouverte du boîtier de la cellule; dans cette cellule ledit membre de scellement et d'isolation comprend une plate-forme centrale pourvue d'une bosse centrale s'étendant axialement, cette plate-forme comportant au moins trois membranes d'aération qui ne sont pas plus épaisses que 0,02 cm (0,008 pouces) et qui couvrent au moins à peu près 30% de l'aire de la surface de ladite plate-forme, à l'exclusion de la partie de la bosse, ainsi que des moyens (24) pour renforcer le membre de scellement et d'isolation.

14. Cellule suivant la revendication 13 dans laquelle lesdites membranes d'aération couvrent jusqu'à environ 50% de l'aire de la surface de la plate-forme et ledit membre de scellement et d'isolation est fabriqué à partir d'une polyoléfine chargée de produits minéraux.

15. Cellule suivant la revendication 13 ou 14 dans laquelle ledit membre de scellement et d'isolation comprend en outre un membre tronconique pendant vers le bas et fixé à la circonférence externe de la plate-forme; un membre de fond annulaire fixé par sa circonférence interne à la partie inférieure du membre tronconique; une paroi externe s'étendant vers le haut et fixé à la circonférence externe du membre de fond annulaire, et dans laquelle ladite paroi externe inclut un épaulement s'étendant vers l'extérieur.

16. Cellule suivant la revendication 15 dans laquelle ledit boîtier cylindrique est pourvu d'un gradin dirigé vers l'extérieur et situé au voisinage de son extrémité ouverte, de telle manière que l'épaulement du membre de scellement et d'isolation entre en prise avec le gradin.

17. Cellule suivant la revendication 15 dans laquelle ledit boîtier cylindrique est pourvu d'un bourrelet dirigé vers l'intérieur et situé au voisinage de l'extrémité ouverte du boîtier, de telle manière que l'épaulement du membre de scellement et d'isolation entre en prise avec le bourrelet.

18. Cellule électrochimique ayant un boîtier cylindrique avec une extrémité ouverte fermée par un couvercle tel que revendiqué dans une quelconque des revendications 1 à 12.
